# EUROPÄISCHE PATENTSCHRIFT

(11) **EP 2 709 238 B1**
(45) Veröffentlichungstag und Bekanntmachung des Hinweises auf die Patenterteilung: **17.01.2018**
(21) Anmeldenummer: 12184270.2
(22) Anmeldetag: 13.09.2012
(51) Int. Cl.: H02K 1/27, H02K 21/12, H02K 21/14

(54) **Permanenterregte Synchronmaschine mit Ferritmagneten**
Permanently excited synchronous machine with ferrite magnets
Machine synchrone à excitation permanente dotée d'aimants en ferrite

(43) Veröffentlichungstag der Anmeldung: 19.03.2014
(73) Patentinhaber: Siemens Aktiengesellschaft, 80333 München (DE)
(72) Erfinder: Vollmer, Rolf, 36129 Gersfeld (DE); Schneider, Wolfgang, 36037 Fulda (DE)

(56) Entgegenhaltungen:
- EP-A1- 1 850 454
- DE-A1-102007 051 105

## Beschreibung

Die Erfindung betrifft eine permanenterregte Synchronmaschine mit einem Stator, der ein in Nuten eines Blechpakets angeordnetes Wicklungssystem aufweist, das an den Stirnseiten des Blechpakets Wickelköpfe bildet, und einem Rotor, der mit einer Welle drehfest verbunden ist, wobei der Rotor Ferritmagnete aufweist.
Um bei permanenterregten Synchronmaschinen eine hohe Luftspaltinduktion zu erhalten, werden vorzugsweise Selten-Erden-Magnete eingesetzt. Diese sind jedoch sehr teuer, so dass versucht wird, auf die kostengünstigeren Ferritmagnete auszuweichen. Um dabei aber eine hohe Luftspaltinduktion zu erhalten, werden gewisse Sammleranordnungen, wie sie beispielsweise aus der EP 0 126 997 bekannt sind, verwendet. Dies gelingt in ausreichendem Maße nur dann, wenn der Rotor eine vergleichsweise hohe Polzahl aufweist. Die EP 1 850 454 A1 offenbart einen elektrischen Antriebsmotor, dessen Rotor axial länger ausgeführt ist als der Stator. Dadurch konzentriert sich der magnetische Fluss in axialer Richtung.

Ausgehend davon, liegt der Erfindung die Aufgabe zugrunde, bei Verwendung von kostengünstigen Ferritmagneten im Luftspalt der permanenterregten Synchronmaschine eine ausreichende hohe Luftspaltinduktion zu erhalten, wobei der Rotor eine vergleichsweise geringe Polzahl aufweist.
Die Lösung der gestellten Aufgabe gelingt durch eine Permanenterregte Synchronmaschine,
- mit einem Stator, der in Nuten eines Blechpakets des Stators angeordnetes Wicklungssystem aufweist, das an den Stirnseiten des Blechpakets Wickelköpfe bildet,
- mit einem Rotor, der mit einer Welle drehfest verbunden ist,
- wobei der Rotor Ferritmagnete aufweist, die sich axial über die Stirnseiten des Stators erstrecken,
- wobei durch elektromagnetische Wechselwirkung über einen Luftspalt zwischen Stator und Rotor im Betrieb der permanenterregten Synchronmaschine eine Rotation um eine Rotationsachse in Richtung einer Rotationsrichtung erfolgt,
- wobei radial über den jeweiligen Ferritmagneten eines magnetischen Pols, ein Flusskonzentrationselement vorgesehen ist, das die magnetischen Feldlinien der Ferritmagnete auf die axiale Länge des Blechpakets des Stators bündelt,
- wobei ein Fixierungselement zur Halterung und Positionierung der Flusskonzentrationselemente auf den Ferritmagneten eines magnetischen Pols vorgesehen ist.

Die Lösung der gestellten Aufgabe gelingt ebenfalls durch ein Verfahren zur Herstellung eines Rotors durch folgende Schritte:
- Fixierung von Ferritmagneten auf einer Welle,
- Anordnung von Flusskonzentrationselementen auf den Ferritmagneten,
- Fixieren der durch Flusskonzentrationselement und Ferritmagnet gebildeten magnetischen Pole an der Welle durch geeignete Fixierungselemente, wie Blechhülsen oder Glasfaserbandagen.

Die Lösung der gestellten Aufgabe gelingt ebenfalls durch ein weiteres Verfahren zur Herstellung eines Rotors durch folgende Schritte:
- Herstellung einzelner Pole, die einen zumindest einen Ferritmagneten und ein radial daran anschließendes Flusskonzentrationselement,
- Anordnung der Pole auf einer Welle,
   - Fixieren der magnetischen Pole an der Welle durch geeignete Fixierungselemente, wie Blechhülsen oder Glasfaserbandagen.

Die Ferritmagnete werden nun erfindungsgemäß direkt auf einem weichmagnetischen Rückschluss, insbesondere der Welle, geklebt oder auf andere Art fixiert, wobei ein magnetischer Pol axial länger ausgeführt ist als das Blechpaket des Stators.

Einmagnetischer Pol wird dabei in axialer und/oder Rotationsrichtung durch einen oder mehrere Ferritmagnete gebildet.

Grundsätzlich kann ein derartiger Rotor auf zwei Arten hergestellt werden.

Entweder er wird radial ausgehend von der Welle schichtweise aufgebaut, also zuerst die Ferritmagnete auf der Welle fixieren, insbesondere kleben. Danach die Flusskonzentrationselemente radial über den jeweiligen Ferritmagneten anbringen. Anschließend wird das Gesamtpaket mit Fixierungselementen fixiert und positioniert.

Die zweite Möglichkeit besteht darin, jeden Pol vorab einzeln zu fertigen und danach diese Pole auf der Welle zu fixieren. Es schließt sich daran, der auch von oben bekannte Herstellungsschritt der Fixierung des Gesamtpakets an.

Pollücken, die sich bei jeder der oben beschriebenen Herstellungsarten ergeben und auch technisch notwendig sind, werden entweder mit geeigneten Materialen vorzugsweise vor einer Fixierung bzw. Bandagierung durchgeführt. Diese Materialien sind amagnetisch und elektrische nicht leitfähig.

Durch die radial über den Ferritmagneten angeordneten Flusskonzentrationselemente wird der Fluss des Ferritmagnets auf die aktive Länge, also das Blechpaket des Stators konzentriert bzw. gebündelt und an diesen über den Luftspalt weitergeleitet. Damit wird eine ausreichend hohe Luftspaltinduktion erreicht, die sich insbesondere bei einem Längenverhältnis eines magnetischen Pols zu der axialen Länge des Blechpakets des Stators von > 1,8 äußerst positiv auswirkt. Um die Fliehkräfte der Anordnung des Rotors aufzunehmen, wird radial über die Flusskonzentrationselemente ein Fixierungselement angebracht. Diese Fixierungselemente sind entweder eine amagnetische Blechhülse, die axial über die Anordnung von Welle, Ferritmagnet und Flusskonzentrationselement aufgebracht wird oder eine Glasfaserbandage. Falls das Fixierungselement als Glasfaserbandage ausgeführt ist, sind zusätzliche Vorrichtungen vorzusehen, die einen definierten Anfangs- und Endpunkt für die Bandage definieren. Diese definierten Anfangs- und Endpunkte liegen vorzugsweise axial außerdem des Luftspaltes der permanenterregten Synchronmaschine, d.h. jenseits der Stirnseiten des Blechpakets des Stators.

Um Wirbelstromverluste im Bereich des Blechpakets des Stators, die aufgrund von nutharmonischen oder anderen Oberwellen entstehen, ist dieser Bereich geblecht ausgeführt.

Um vorzugsweise ein sinusförmiges Luftspaltfeld zu erhalten, ist das Flusskonzentrationselement, an der Oberfläche in Rotationsrichtung mit einer Kontur versehen, derart, dass der Luftspalt in der Polmitte im Vergleich zum Luftspalt am Rand des Pols kleiner ist. Dieser Vorteil stellt sich unabhängig davon ein, ob das Flusskonzentrationselement im Bereich des Blechpakets des Stators einstückig oder geblecht ausgeführt ist.

Durch die axiale Flusskonzentration wird zusammen mit dem gezeigten streuungsarmen Aufbau eine hohe Luftspaltinduktion erreicht. Damit wird lediglich der Rotor länger, der Stator kann jedoch so dimensioniert werden, wie er beim Einsatz von Hochenergiemagneten dimensioniert ist. Vorteilhafterweise ist das Flusskonzentrationselement in seiner axialen zusätzlichen Länge unterhalb der Wickelköpfe des Stators anordnet, so dass die Maschine insgesamt axial nicht wesentlich länger wird.

Durch die Gestaltung der äußeren Kontur der Flusskonzentrationselemente reduziert sich auch die Drehmomentenwelligkeit und es werden die Amplituden der magnetischen Feldwellen im Eisen des Stators reduziert, was zu einer vergleichsweise geringen Erwärmung des Stators vermindert durch Hysterese- und Wirbelstromverlusten führt.

Die Erfindung sowie weitere vorteilhafte Ausgestaltungen der Erfindung werden anhand eines prinzipiell dargestellten Ausführungsbeispiels näher erläutert, darin zeigen:
- FIG 1: einen Längsschnitt einer permanenterregten Synchronmaschine,
- FIG 2: einen Querschnitt einer permanenterregten Synchronmaschine,
- FIG 3: einen Pol einer permanenterregten Synchronmaschine
- FIG 4: einen Querschnitt einer permanenterregten Synchronmaschine.

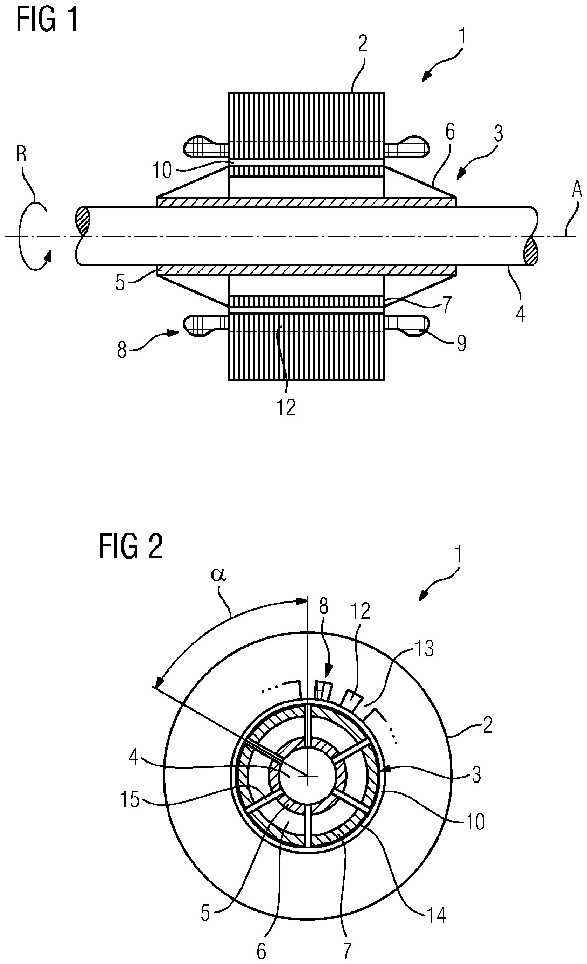

FIG 1 zeigt in einem Längsschnitt in einer prinzipiellen Darstellung eine permanenterregte Synchronmaschine 1 mit einem Stator 2, wobei in Nuten 12 eines Blechpakets des Stators 2 ein Wicklungssystem 8 eingebettet ist, das an den Stirnseiten des Blechpakets des Stators 2 Wickelköpfe 9 ausbildet. Von einem Luftspalt 10 radial nach innen beabstandet befindet sich ein Rotor 3, der mit einer Welle 4 drehfest verbunden ist und der sich im Betrieb der permanenterregten Synchronmaschine 1 um eine Rotationsachse A in Rotationsrichtung R bewegt. Direkt auf der weichmagnetischen Welle 4 sind vorzugsweise radial magnetisierte Ferritmagnete 5 schalenförmig angeordnet. Diese Ferritmagnete 5 sind mit der Welle 4 vorzugsweise verklebt.

Es können ebenso quaderförmige Ferritmagnete 5 verwendet werden. Diese sind jedoch auf einer speziellen polygonartig angeordneten Hülse, die wiederum drehfest mit der Welle 4 verbunden ist, positioniert. Es kann aber auch die Welle 4 ebene Flächen aufweisen, die durch einen materialabhebenden Vorgang geschaffen werden.

Radial nach außen schließen sich pro magnetischem Pol 11, der durch einen oder mehrere Ferritmagnete 5 gebildet wird, ein Flusskonzentrationselement 6 an, das einstückig ausgeführt ist und das den magnetischen Fluss in Richtung des Luftspaltes 10 führt, bzw. konzentriert oder bündelt.

Um die einzelnen Flusskonzentrationselemente 6 der jeweiligen magnetischen Pole 11 zusammen mit den Ferritmagneten 5 zusätzlich zu fixieren, ist am radial äußeren Umfang des Rotors 3 eine Bandage 14 vorgesehen, deren Anfangs- und Endpunkt vorzugsweise auf den konusartigen Flanken radial unterhalb des Wickelkopfes 9 angeordnet sind.

FIG 2 zeigt in einem Querschnitt einen magnetischen Pol 11 mit einem Polteilungsverhältnis, wobei der magnetische Pol 11 eine Polbedeckung von nahezu 100 % aufweist. Die Pollücken 15 sind dementsprechend schmal ausgeführt. Die Pollücken 15 verhindern, dass sich der magnetische Fluss zwischen benachbarten magnetischen Polen 11 "kurzschließt", ohne über den Luftspalt 10 der elektrischen Maschine 1 oder über die weichmagnetische Welle 4 "geflossen" zu sein.

Die Pollücken 15 sind entweder freie Spalte, also nur mit Luft oder mit einem amagnetischen, elektrisch nicht leitfähigem Material gefüllt.

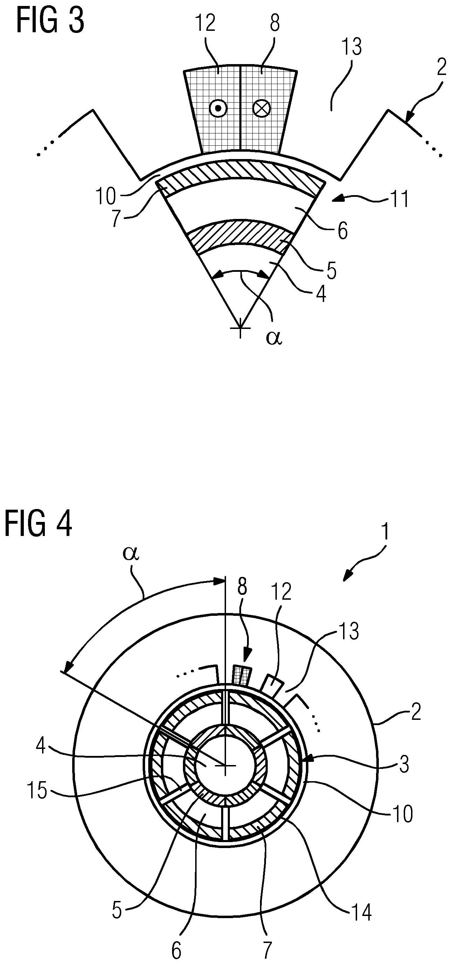

Die Pollücken 15, also die Spalte zwischen zwei benachbarten magnetischen Polen 11 erstrecken sich radial entweder bis zur Welle 4 oder auch nur zum Ferritmagneten 5. Im ersten Fall bilden die Ferritmagnete 5 mit ihren Flusskonzentrationselementen 6 gemäß FIG 2, 3 genau den Polteilungswinkel *α*. Zwischen den Ferritmagneten 5 benachbarter magnetischer Pole 11 ist somit ebenfalls die Pollücke 15.

Im zweiten Fall liegen die Ferritmagnete der benachbarten magnetischen Pole 11 direkt aneinander gemäß FIG 4. Damit endet dann, radial betrachtet die Pollücke 15 an der Oberfläche der Ferritmagnete 5. Aufgrund der Materialeigenschaften der Magnete liegt damit kein magnetischer Kurzschluss vor.

Vorzugsweise ist das Flusskonzentrationselement 6 im Bereich des Luftspaltes 10 mit einer Oberflächenkontur in Rotationsrichtung versehen, derart, dass der Luftspalt 10 in der Polmitte geringer ist als an seinen Polenden. Damit wird ein sinusförmiges Luftspaltfeld geschaffen.

Um die Wirbelstromverluste, insbesondere im oberflächennahen Bereich des Flusskonzentrationselements 6 im Bereich des Luftspaltes 10 zu reduzieren, ist dieser Bereich - wie auch FIG 1 zu entnehmen - geblecht ausgeführt. Diese Blechung 7 ist in das Flusskonzentrationselement 6 um einige mm, vorzugsweise 0,5 bis 5 mm eingelassen.

FIG 3 zeigt in einer Detaildarstellung einen Pol 11 mit seinem Polteilungsverhältnis *α* und das Wicklungssystem 8 eines Stators 2, dessen Wicklungssystem aus Zahnspulen aufgebaut ist, derart, dass eine Spule jeweils einen Zahn 13 umfasst.

Durch den erfindungsgemäßen Aufbau der permanenterregten Synchronmaschine 1 wird nun bei kostengünstiger Verwendung von Ferritmagneten 5 eine ausreichend hohe Luftspaltinduktion im Luftspalt 10 geschaffen. Die Pole 11 weisen eine äußere Kontur auf, die ein sinusförmiges Luftspaltfeld erzeugt. Damit wird zum einen die Drehmomentenwelligkeit reduziert und zum anderen werden die Amplituden der magnetischen Feldwellen im Eisen des Stators 2 reduziert. Des Weiteren ist dieser Aufbau vergleichsweise streuungsarm. Diese Merkmale führen zu einer geringeren Erwärmung des Stators 2 durch verminderte Hysterese- und Wirbelstromverlusten.

Um eine permanenterregte Synchronmaschine 1 zu erhalten, wird ein erfindungsgemäßer Rotor 3 zunächst mit der Welle 4 drehfest verbunden und danach in die Bohrung des Stators 2 eingesetzt. Die Welle 4 wird dabei von nicht näher dargestellten Lagern drehbar gehalten, wobei Lagerschilde die Lager aufnehmen und am Stator - bei gehäuselosen Maschinen - oder am Gehäuse befestigt sind.

## Patentansprüche

1. Permanenterregte Synchronmaschine (1),
- mit einem Stator (2), der in Nuten (12) eines Blechpakets des Stators (2) angeordnetes Wicklungssystem (8) aufweist, das an den Stirnseiten des Blechpakets Wickelköpfe (9) bildet,
- mit einem Rotor (3), der mit einer Welle (4) drehfest verbunden ist,
- wobei der Rotor (3) Ferritmagnete (5) aufweist, die sich axial über die Stirnseiten des Stators (2) erstrecken,
- wobei durch elektromagnetische Wechselwirkung über einen Luftspalt (12) zwischen Stator (2) und Rotor (3) im Betrieb der permanenterregten Synchronmaschine (1) eine Rotation um eine Rotationsachse (A) in Richtung einer Rotationsrichtung (R) erfolgt,
- **dadurch gekennzeichnet,**
**dass** radial über den jeweiligen Ferritmagneten (5) eines magnetischen Pols (11) ein Flusskonzentrationselement (6) vorgesehen ist, das die magnetischen Feldlinien der Ferritmagnete (5) auf die axiale Länge des Blechpakets des Stators (2) bündelt,
- wobei ein Fixierungselement (14) zur Halterung und Positionierung der Flusskonzentrationselemente (6) auf den Ferritmagneten (5) eines magnetischen Pols (11) vorgesehen ist.

2. Permanenterregte Synchronmaschine (1) nach Anspruch 1, **dadurch gekennzeichnet, dass** die in Rotationsrichtung (R) betrachtete Kontur des Flusskonzentrationselements im Bereich des Luftspalts (10) derart ausgebildet ist, dass sich ein sinusförmiges Luftspaltfeld einsteht, in dem der Luftspalt (10) in der Polmitte eine geringere radiale Ausdehnung aufweist als an den Rändern des magnetischen Pols (11).

3. Permanenterregte Synchronmaschine (1) nach einem der vorhergehenden Ansprüche, **dadurch gekennzeich-**n e t, dass das Flusskonzentrationselement (6) im Bereich des Luftspalts (10) geblecht ausgeführt ist.

4. Permanenterregte Synchronmaschine (1) nach einem der vorhergehenden Ansprüche, **dadurch gekennzeich-net,** dass das Fixierungselement als amagnetische Blechhülse ausgeführt ist.

5. Permanenterregte Synchronmaschine (1) nach einem der Ansprüche 1 bis 3, **dadurch gekennzeich**n e t, dass das Fixierungselement als Glasfaserbandage ausgebildet ist, wobei in dem insbesondere konischen Abschnitten des Flusskonzentrationselements (6) Vorrichtungen vorgesehen sind, die gestatten, die Bandage sowohl am Anfang als auch am Ende zu fixieren.

6. Permanenterregte Synchronmaschine (1) nach einem der vorhergehenden Ansprüche, **dadurch gekennzeich-net,** dass die axiale Länge eines magnetischen Pols (11) der durch einen oder mehrere Ferritmagnete (5) gebildet ist, dem ca. 1,8-fachen der axialen Länge des Blechpakets des Stators (2) entspricht.

7. Permanenterregte Synchronmaschine (1) nach einem der vorhergehenden Ansprüche, **dadurch gekennzeich-net,** dass die Ferritmagnete (5) schalenförmig aufgebaut sind, indem der Innenradius der Ferritmagnete (5) dem Außenradius der Welle (4) entspricht.

8. Permanenterregte Synchronmaschine (1) nach Anspruch 7, **dadurch gekennzeichnet, dass** die Ferritmagnete (5) eine im Wesentlichen radiale Magnetisierung aufweisen.

9. Verfahren zur Herstellung eines Rotors (3) nach Anspruch 1, **gekennzeichnet durch** folgende Schritte:
- Fixierung von Ferritmagneten (5) auf einer Welle (4),
- Anordnung von Flusskonzentrationselementen (6) auf den Ferritmagneten,
- Fixieren der **durch** Flusskonzentrationselement (6) und Ferritmagnet (5) gebildeten magnetischen Pole (11) an der Welle (4) **durch** geeignete Fixierungselemente, wie Blechhülsen oder Glasfaserbandagen.

10. Verfahren zur Herstellung eines Rotors (3) nach Anspruch 1, **gekennzeichnet durch** folgende Schritte:
- Herstellung einzelner Pole (11), die einen zumindest einen Ferritmagneten (5) und ein radial daran anschließendes Flusskonzentrationselement (6) aufweisen,
- Anordnung der Pole (11) auf einer Welle (4),
- Fixieren der magnetischen Pole (11) an der Welle (4) **durch** geeignete Fixierungselemente, wie Blechhülsen oder Glasfaserbandagen.

## Claims

1. Permanently excited synchronous machine (1),
- with a stator (2) having a winding system (8) arranged in grooves (12) of a laminated core of the stator (2), the winding system forming winding overhangs (9) on the end faces of the laminated core,
- with a rotor (3) which is non-rotatably connected to a shaft (4),
- wherein the rotor (3) has ferrite magnets (5) which extend axially over the end faces of the stator (2),
- wherein due to electromagnetic interaction across an air gap (12) between stator (2) and rotor (3) during operation of the permanently excited synchronous machine (1) there is a rotation about an axis of rotation (A) in the direction of a direction of rotation (R),
- **characterised in that**
- provided radially across the respective ferrite magnets (5) of a magnetic pole (11) is a flux concentration element (6) which bundles the magnetic field lines of the ferrite magnets (5) onto the axial length of the laminated core of the stator (2),
- wherein a fixing element (14) for holding and positioning the flux concentration elements (6) is provided on the ferrite magnets (5) of a magnetic pole (11).

2. Permanently excited synchronous machine (1) according to claim 1,
**characterised in that** the contour of the flux concentration element, viewed in the direction of rotation (R), is designed in the region of the air gap (10) such that a sinusoidal air gap field is produced in which the air gap (10) has a smaller radial extension in the middle of the pole than at the edges of the magnetic pole (11).

3. Permanently excited synchronous machine (1) according to any one of the preceding claims, **characterised in that** the flux concentration element (6) is designed so as to be laminated in the region of the air gap (10).

4. Permanently excited synchronous machine (1) according to any one of the preceding claims, **characterised in that** the fixing element is designed as an amagnetic bush.

5. Permanently excited synchronous machine (1) according to any one of claims 1 to 3, **characterised in that** the fixing element is designed as a fibreglass bandage, wherein provided in the, in particular conical, sections of the flux concentration element (6) are devices which allow the bandage to be fixed at the start as well as at the end.

6. Permanently excited synchronous machine (1) according to any one of the preceding claims, **characterised in that** the axial length of a magnetic pole (11), which is formed by one or more ferrite magnet(s) (5), corresponds to about 1.8 times the axial length of the laminated core of the stator (2).

7. Permanently excited synchronous machine (1) according to any one of the preceding claims, **characterised in that** the ferrite magnets (5) are dish-shaped as the internal radius of the ferrite magnets (5) matches the external radius of the shaft (4).

8. Permanently excited synchronous machine (1) according to claim 7,
**characterised in that** the ferrite magnets (5) have a substantially radial magnetization.

9. Method for producing a rotor (3) according to claim 1, **characterised by** the following steps:
- fixing ferrite magnets (5) to a shaft (4),
- arranging flux concentration elements (6) on the ferrite magnets,
- fixing the magnetic poles (11) formed by flux concentration element (6) and ferrite magnet (5) to the shaft (4) by way of suitable fixing elements, such as bushes or fibreglass bandages.

10. Method for producing a rotor (3) according to claim 1,
**characterised by** the following steps:
- producing individual poles (11) which have at least one ferrite magnet (5) and a flux concentration element (6) radially adjoining it,
- arranging the poles (11) on a shaft (4),
- fixing the magnetic poles (11) to the shaft (4) by way of suitable fixing elements, such as bushes or fibreglass bandages.

## Revendications

1. Machine (1) synchrone à excitation permanente,
- comprenant un stator (2), qui a un système (8) d'enroulement disposé dans des encoches (12) d'un paquet de tôles du stator (2) et formant des têtes (9) de bobine sur les côtés frontaux du paquet de tôles,
- comprenant un rotor (3) solidaire en rotation d'un arbre (4),
- dans lequel le rotor (3) a des aimants (5) en ferrite, qui s'étendent axialement sur les côtés frontaux du stator (2),
- dans laquelle, par interaction électromagnétique, il se produit, par un entrefer (12) entre le stator (2) et le rotor (3), lorsque la machine (1) synchrone à excitation permanente est en fonctionnement, une rotation autour d'un axe (A) de rotation, dans un sens (R) de rotation,
**caractérisée en ce que**
- il est prévu radialement, sur des aimants (5) respectifs en ferrite d'un pôle (11) magnétique, un élément (6) de concentration du flux, qui met en faisceau les lignes de champ magnétique des aimants (5) en ferrite sur la longueur axiale du paquet de tôles du stator (2),
- dans laquelle il est prévu un élément (14) d'immobilisation pour le maintien et la mise en position des éléments (6) de concentration de flux sur les aimants (5) en ferrite d'un pôle (11) magnétique.

2. Machine (1) synchrone à excitation permanente suivant la revendication 1, **caractérisée en ce que** le contour, considéré dans le sens (R) de rotation de l'élément de concentration de flux dans la région de l'entrefer (10), est constitué de manière à créer un champ d'entrefer sinusoïdal, dans lequel l'entrefer (10) a, au milieu du pôle, une étendue radiale plus petite que sur les bords du pôle (11) magnétique.

3. Machine (1) synchrone à excitation permanente suivant l'une des revendications précédentes, **caractérisée en ce que** l'élément (6) de concentration du flux est réalisé feuilleté dans la région de l'entrefer (10).

4. Machine (1) synchrone à excitation permanente suivant l'une des revendications précédentes, **caractérisée en ce que** l'élément d'immobilisation est réalisé sous la forme d'un manchon de tôle amagnétique.

5. Machine (1) synchrone à excitation permanente suivant l'une des revendications 1 à 3, **caractérisée en ce que** l'élément d'immobilisation est constitué sous la forme d'un bandage en fibre de verre, dans laquelle, dans les parties notamment coniques de l'élément (6) de concentration du flux, sont prévus des dispositifs, qui permettent d'immobiliser le bandage, à la fois au début et à la fin.

6. Machine (1) synchrone à excitation permanente suivant l'une des revendications précédentes, **caractérisée en ce que** la longueur axiale d'un pôle (11) magnétique, qui est formé d'un ou de plusieurs aimants (5) en ferrite, représente environ 1,8 fois la longueur axiale du paquet de tôles du stator (2).

7. Machine (1) synchrone à excitation permanente suivant l'une des revendications précédentes, **caractérisée en ce que** les aimants (5) en ferrite sont constitués en forme de coque, par le fait que le rayon intérieur des aimants (5) en ferrite correspond au rayon extérieur de l'arbre (4).

8. Machine (1) synchrone à excitation permanente suivant la revendication 7, **caractérisée en ce que** les aimants (5) en ferrite ont une aimantation essentiellement radiale.

9. Procédé de fabrication d'un rotor (3) suivant la revendication 1, **caractérisé par** les stades suivants :
- immobilisation d'aimants (5) en ferrite sur un arbre (4),
- mise d'éléments (6) de concentration de flux sur les aimants en ferrite,
- immobilisation du pôle (11) magnétique, formé par l'élément (6) de concentration de flux et par l'aimant (5) en ferrite, sur l'arbre (4), par des éléments d'immobilisation appropriés, comme des manchons de tôle ou des bandages en fibre de verre.

10. Procédé de production d'un rotor (3) suivant la revendication 1, **caractérisé par** les stades suivantes :
- production de divers pôles (11), qui ont au moins un aimant (5) en ferrite et un élément (6) de concentration de flux s'y raccordant radialement,
- mise des pôles (11) sur un arbre (4),
- immobilisation des pôles (11) magnétiques sur l'arbre (4) par des éléments d'immobilisation appropriés, comme des manchons de tôle ou des bandages en fibre de verre.
